# EUROPÄISCHE PATENTANMELDUNG

(11) **EP 2 810 898 A1**
(43) Veröffentlichungstag der Anmeldung: **10.12.2014**
(21) Anmeldenummer: 14168663.4
(22) Anmeldetag: 16.05.2014
(51) Int. Cl.: B65D 88/12, B60J 5/04, B65D 90/00

(54) **Transportbehälter, insbesondere Fahrzeugaufbau oder Container**

(30) Priorität: 17.05.2013 AT 503332013
(71) Anmelder: Strasser, Johann Sen, 5301 Eugendorf (AT); Strasser, Johann Jun, 5301 Eugendorf (AT); Strasser, Wolfgang, 5301 Eugendorf (AT); Kalkhofer, Wolfgang, 5023 Salzburg (AT)
(72) Erfinder: Strasser, Johann Sen, 5301 Eugendorf (AT); Strasser, Johann Jun, 5301 Eugendorf (AT); Strasser, Wolfgang, 5301 Eugendorf (AT); Kalkhofer, Wolfgang, 5023 Salzburg (AT)
(74) Vertreter: Sonn & Partner Patentanwälte

(57) **Zusammenfassung**

Transportbehälter (1), insbesondere Fahrzeugaufbau oder Container, mit einem einen Transportraum (3) einschließenden Rahmenaufbau (2), mit einer Wand (4) und mit einer Verschwenkvorrichtung (5) zum Verschwenken der Wand (4) zwischen einer am Rahmenaufbau (2) anliegenden, eine Ladeöffnung (6) verschließenden Schließstellung, und einer die Ladeöffnung (6) freigebenden Offenstellung, wobei die Verschwenkvorrichtung (5) ein mit der Wand (4) gelenkig verbundenes Hubarmelement (7) und eine Antriebseinheit (9) zur Drehmomentübertragung auf das Hubarmelement (7) aufweist. Die Verschwenkvorrichtung (5) weist zwischen dem Rahmenaufbau (2) und dem Hubarmelement (7) ein Anlenkelement (10) auf, welches über ein erstes Gelenk (11) mit dem Hubarmelement (7) und über ein zweites Gelenk (12) mit dem Rahmenaufbau (2) verbunden ist. Weiters weist die Verschwenkvorrichtung (5) ein Sicherungselement (13) auf, welches von einer das zweite Gelenk (12) des Anlenkelements (10) blockierenden Sperrstellung in der Schließstellung der Wand (4) bei Verschwenkung des Hubarmelements (7) um einen vorgegebenen Schwenkwinkel in eine Freigabestellung überführbar ist, in welcher das zweite Gelenk (12) des Anlenkelements (10) freigegeben ist, so dass das mit dem Hubarmelement (7) verbundene erste Gelenk (11) des Anlenkelements (10) bei einer weiteren Verschwenkung des Hubarmelements (7) in Richtung der Offenstellung der Wand (4) entlang einer vorgegebenen Bahn verlagerbar ist.

## Beschreibung

Die Erfindung betrifft einen Transportbehälter, insbesondere Fahrzeugaufbau oder Container, mit einem einen Transportraum einschließenden Rahmenaufbau, mit einer Wand und mit einer Verschwenkvorrichtung zum Verschwenken der Wand zwischen einer am Rahmenaufbau anliegenden, eine Ladeöffnung verschließenden Schließstellung, und einer die Ladeöffnung freigebenden Offenstellung, wobei die Verschwenkvorrichtung ein mit der Wand gelenkig verbundenes Hubarmelement und eine Antriebseinheit zur Drehmomentübertragung auf das Hubarmelement aufweist.

Solche Transportbehälter sind im Stand der Technik in verschiedenen Ausführungen bekannt. Einerseits wurden Transportbehälter vorgeschlagen, bei welchen das Hubarm- bzw. Lenkelement in der Schließstellung der Wand horizontal auf der Dachfläche aufliegt und beim Öffnen der Wand auf die andere Seite umgeklappt wird. Eine solche Ausführung ist beispielsweise in der AT 511 777 gezeigt. Diese Ausführung hat sich grundsätzlich als sehr zuverlässig erwiesen, bringt jedoch den Nachteil mit sich, dass die Verschwenkvorrichtung relativ viel Platz im Dachbereich einnimmt.

Andererseits ist aus der WO 97/34793 eine Vorrichtung zum Öffnen einer zweiteiligen Seitenwand bekannt, bei welcher der obere Wandteil um eine horizontale Achse verschwenkbar an dem Transportbehälter gelagert ist. Um die Verschwenkung der Seitenwand zwischen der am Rahmenaufbau anliegenden Schließstellung und der Offenstellung auf dem Dach zu erlauben, ist die Achse des oberen Wandteils bezüglich der oberen Eckkante des Transportbehälters nach außen und nach oben versetzt angeordnet, da andernfalls die Seitenwand beim Öffnungsvorgang mit dem Aufbau kollidieren würde.

In den DE 20 2011 002919 U1, DE 44 27 518 C1 und DE 29 31 111 A1 sind andersartige Antriebsvorrichtungen beschrieben.

Demzufolge besteht die Aufgabe der vorliegenden Erfindung darin, einen konstruktiv einfachen Transportbehälter der eingangs angeführten Art zu schaffen, welcher hinsichtlich der vorstehend erörterten Nachteile verbessert ist. Die Erfindung setzt sich daher insbesondere zum Ziel, den Raumbedarf für die Verschwenkvorrichtung zu reduzieren und die Verschwenkung der Wand zwischen der Schließ- und der Offenstellung mit konstruktiv einfachen Mitteln über einen großen Schwenkwinkel zu ermöglichen.
Diese Aufgabe wird durch einen Transportbehälter, wie in Anspruch 1 angegeben, gelöst. Bevorzugte Ausführungsformen sind in den abhängigen Ansprüchen wiedergegeben.

Erfindungsgemäß weist daher die Verschwenkvorrichtung zwischen dem Rahmenaufbau und dem Hubarmelement ein Anlenkelement auf, welches über ein erstes Gelenk mit dem Hubarmelement und über ein zweites Gelenk mit dem Rahmenaufbau verbunden ist, wobei die Verschwenkvorrichtung weiters ein Sicherungselement aufweist, welches von einer das zweite Gelenk des Anlenkelements blockierenden Sperrstellung in der Schließstellung der Wand bei Verschwenkung des Hubarmelements um einen vorgegebenen Schwenkwinkel in eine Freigabestellung überführbar ist, in welcher das zweite Gelenk des Anlenkelements freigegeben ist, so dass das mit dem Hubarmelement verbundene erste Gelenk des Anlenkelements bei einer weiteren Verschwenkung des Hubarmelements in Richtung der Offenstellung der Wand entlang einer vorgegebenen Bahn verlagerbar ist.
Die Verschwenkvorrichtung wird daher um ein Anlenkelement erweitert, welches den Schwenkpunkt des Hubarmelements relativ zu dem Rahmenaufbau des Transportbehälters und damit die Bewegung der Wand während des Öffnungs- bzw. Schließvorgangs festlegt. Das Anlenkelement wirkt mit einem Sicherungselement zusammen, welches in einer Sperrstellung das Gelenk zwischen dem Anlenkelement und dem Rahmenaufbau blockiert. Durch Verschwenkung des Hubarmelements um einen definierten Schwenkwinkel, bezogen auf die Schließstellung der Wand, wird das Sicherungselement in die Freigabestellung gebracht, in welcher eine Verschwenkung des Anlenkelements freigegeben ist. In der Freigabestellung des Sicherungselements bewirkt die weitere Verschwenkung des Hubarmelements, dass das Gelenk zwischen dem Hubarmelement und dem Anlenkelement verlagert wird. Die Schwenkachse des Gelenks beschreibt hierbei eine vorzugsweise kreisbogenförmige Bahn, welche das Gelenk bevorzugt von einer unteren Stellung nach oben in eine obere Stellung bringt. Somit setzt sich die Bewegung des Hubarmelements ab dem vorgegebenen Öffnungswinkel der Wand einerseits aus der über die Antriebseinheit eingeleitete Verschwenkbewegung und andererseits aus der Verlagerung des Gelenks zwischen dem Hubarmelement und dem Anlenkelement zusammen. Auf diese Weise kann die Verschwenkvorrichtung besonders kompakt ausgebildet werden, wobei die Wand zwischen der Schließ- und der Offenstellung präzise geführt wird. Zudem kann mit konstruktiv einfachen Mitteln eine Blockierung der Verschwenkvorrichtung beim Öffnungs- bzw. Schließvorgang verhindert werden.

Zur selbsttätigen Überführung des Sicherungselements in die Freigabestellung ist es günstig, wenn das Sicherungselement ein in der Ebene der Verschwenkung des Hubarmelements angeordnetes Betätigungsteil aufweist, so dass das Hubarmelement bei Erreichen des vorgegebenen Schwenkwinkels auf das Betätigungsteil des Sicherungselements trifft und dieses in Richtung der Freigabestellung drückt. Demnach wird die Verschiebung des Sicherungselements in die Freigabestellung vorteilhafterweise durch die Verschwenkung des Hubarmelements beim Öffnen der Wand bewirkt. Mit Erreichen des vorgegebenen Schwenkwinkels, welcher zwischen 110° und 170°, insbesondere im Wesentlichen 135°, bezogen auf die Schließstellung der Wand, beträgt, schlägt das Hubarmelement an dem Betätigungsteil des Anlenkelements an. Ausgehend von der Anschlagstellung wird das Sicherungselement bei Fortsetzung des Öffnungsvorgangs mittels des Hubarmelements in die Freigabestellung verschoben, in welcher die Verschwenkbarkeit des Anlenkelements freigegeben ist. Wenn das Sicherungselement in der Freigabestellung vorliegt, wandert das erste Gelenk des Anlenkelements bei einer weiteren Verschwenkung des Hubarmelements entlang der vorgegebenen Bahn nach oben. Aufgrund der Verlagerung des Schwenkpunkts kann das Hubarmelement bis in seine Endstellung verschwenkt werden, ohne dass die Verschwenkbewegung des Hubarmelements durch den Rahmenaufbau blockiert wird. Überdies ist es vorteilhafterweise nicht erforderlich, die Schwenkachse des Hubarmelements bzw. der Wand oberhalb des Dachbereichs anzuordnen.

Um die Verschwenkung des Anlenkelements in Abhängigkeit vom Schwenkwinkel zu sperren bzw. freizugeben, ist es von Vorteil, wenn das Sicherungselement an dem Rahmenaufbau, vorzugsweise in einer horizontalen Ebene, zwischen der Sperrstellung und der Freigabestellung verschieblich gelagert ist.

Zur präzisen Anordnung das Sicherungselement in der Sperr- bzw. Freigabestellung ist es überdies vorteilhaft, wenn das Sicherungselement gegen die Kraft einer Feder zwischen der Sperrstellung und der Freigabestellung verschieblich ist. Demnach ist das Sicherungselement durch Federkraft in Richtung der Sperrstellung vorgespannt, wodurch zuverlässig gewährleistet wird, dass das Sicherungselement bis zum Erreichen des vorgegebenen Schwenkwinkels des Hubarmelements in der Sperrstellung gehalten und erst danach in Richtung der Freigabestellung verschoben wird.

Zur Blockierung des Anlenkelements in der Sperrstellung mit konstruktiv einfachen Mitteln ist es günstig, wenn das Sicherungselement ein insbesondere bolzenförmiges Sperrelement aufweist, welches mit einem entsprechenden Lagerteil des Anlenkelements zusammenwirkt. In der Sperrstellung ist die Beweglichkeit des Lagerteils durch einen Formschluss mit dem Sperrelement gesperrt. Bei Erreichen des vorgegebenen Schwenkwinkels wird die formschlüssige Verbindung zwischen dem Lagerteil des Anlenkelements und dem Sperrelement gelöst, so dass das Anlenkelement in der Freigabestellung des Sicherungselements verschwenkbar ist. Bevorzugt befindet sich das Sperrelement in der Sperrstellung unterhalb des Lagerteils des Anlenkelements, wodurch die Verschwenkung des Anlenkelements auf einfache Weise blockiert wird. Beim Öffnungsvorgang wird das Sperrelement ab dem vorgegebenen Schwenkwinkel von dem Lagerteil des Anlenkelements weg bewegt, bis die Verschwenkbarkeit des Anlenkelements freigegeben ist.

Besonders bevorzugt ist eine Ausführung, bei welcher das Anlenkelement als zweiseitiger Hebel mit dem zweiten Gelenk als Drehpunkt zwischen einem das erste Gelenk aufweisenden ersten Hebelarm und einem das Lagerteil für das Sicherungselement aufweisenden zweiten Hebelarm ausgebildet ist. Bei dieser Ausführung sind daher das Lagerteil für das Sicherungselement und das erste Gelenk für das Hubarmelement bezüglich des zweiten Gelenks auf gegenüberliegenden Seiten des Anlenkelements angeordnet. Zu Beginn des Öffnungsvorgangs wird das vom Hubarmelement in das erste Gelenk eingeleitete Drehmoment über das zweite Gelenk auf das Lagerteil übertragen, welches in der Sperrstellung gegen das Sicherungselement lastet. Bei Fortsetzung des Öffnungsvorgangs wird das Sicherungselement zunächst entlastet, bevor das Sicherungselement ab Erreichen des definierten Schwenkwinkels in Richtung der Freigabestellung verschoben wird.

Zur kompakten Anordnung des Anlenkelements innerhalb der Verschwenkvorrichtung ist es von Vorteil, wenn das Anlenkelement einen ersten Schenkel mit dem ersten Gelenk und einen zweiten Schenkel mit dem Lagerteil aufweist, wobei die Schenkel in einem Winkel von 90° bis 110°, insbesondere im Wesentlichen 100°, zueinander angeordnet sind. Diese Ausführung hat insbesondere den Vorteil, dass das zweite Gelenk des Anlenkelements vom Rand des Rahmenaufbaus nach innen versetzt sein kann, wobei der Rand des Rahmenaufbaus durch die winkelige Anordnung der Schenkel des Anlenkelements freigestellt ist.

Um die Freigabe des Sicherungselements zuverlässig und mit geringem Verschleiß zu bewerkstelligen, ist es günstig, wenn das Sperrelement ein Rollenelement aufweist, welches bei der Verschiebung des Sperrelements entlang einer entsprechenden Lagerfläche des Lagerteils des Anlenkelements abrollbar ist. Alternativ kann eine Gleitlagerung zwischen dem Anlenkelement und dem Sicherungselement vorgesehen sind.

Zum selbsttätigen Öffnen der Wand ist es vorteilhaft, wenn die Antriebseinheit zur Drehmomentübertragung auf das Hubarmelement einen, vorzugsweise genau einen, insbesondere hydraulischen oder pneumatischen Linearantrieb aufweist. Bevorzugt ist der Linearantrieb als Zylinder-Kolben-Antrieb ausgeführt, welcher im Stand der Technik allgemein bekannt ist, so dass sich nähere Ausführungen hierzu erübrigen können. Wesentlich ist jedoch, dass die hier beschriebene Verschwenkvorrichtung bevorzugt mit einem einzigen Linearantrieb auskommt, um das Hubarmelement zwischen der Schließ- und der Offenstellung der Wand zu verschwenken.

Um den Platzbedarf der Verschwenkvorrichtung an dem Rahmenaufbau zu verringern, ist bevorzugt zwischen dem Linearantrieb und dem Hubarmelement ein Kraftübertragungselement vorgesehen, welches über eine erste Gelenkverbindung mit dem Hubarmelement und über eine zweite Gelenkverbindung mit dem Linearantrieb verbunden ist. Durch die gelenkige Anordnung des Kraftübertragungselements zwischen dem Linearantrieb und dem Hubarmelement kann vorteilhafterweise der Verschwenkwinkel des Linearantriebs zwischen Schließ- und Offenstellung der Wand besonders gering gehalten werden. Insbesondere ist eine Ausführung bevorzugt, bei welcher der gelenkig mit dem Rahmenaufbau verbundene Linearantrieb beim Öffnen der Wand auf derselben Seite bezüglich des Gelenks am Rahmenaufbau verbleibt, d.h. nicht auf die andere Seite umgeklappt wird. Vorteilhafterweise kann hiermit der Platzbedarf der Verschwenkvorrichtung am Rahmenaufbau wesentlich reduziert werden. Bevorzugt sind zwei idente Kraftübertragungselemente vorgesehen, welche an gegenüberliegenden Seiten des Hubarmelements angreifen. Entsprechend können auch zwei idente Anlenkelemente vorgesehen sein, welche ebenfalls an gegenüberliegenden Seiten des Hubarmelements, vorzugsweise an dessen Endbereichen, angelenkt sind. Besonders vorteilhaft ist eine Ausführung, bei welcher das Kraftübertragungselement und das Anlenkelement derart angeordnet sind, dass der Abstand zwischen der zweiten, mit dem Linearantrieb verbundenen Gelenkverbindung des Kraftübertragungselements und dem ersten, mit dem Hubarmelement verbundenen Gelenk des Anlenkelements bei der Verschwenkung des Hubarmelements zwischen der Schließ- und der Offenstellung durch die Verlagerung des ersten Gelenks im Wesentlichen konstant ist. Dadurch kann daher vorteilhafterweise eine annähernd konstante Öffnungs- bzw. Schließgeschwindigkeit erreicht werden.

Um das Kraftübertragungselement beim Verschwenken des Hubarmelements über den Linearantrieb entlang einer definierten Bewegung zu zwingen, ist es günstig, wenn die zweite Gelenkverbindung zwischen dem Linearantrieb und dem Kraftübertragungselement in einer Führungsschiene verschieblich gelagert ist. Bei einer bevorzugten Ausführung sind zwei Führungsschienen vorgesehen, welche die gegenüberliegenden Enden der Gelenkachse der zweiten Gelenkverbindung lagern.

Zur Anpassung der Führungsschiene an die einzelnen Stadien des Öffnungs- bzw. Schließvorgangs ist es vorteilhaft, wenn die Führungsschiene einen im Wesentlichen horizontalen ersten Abschnitt und einen im Wesentlichen horizontalen zweiten Abschnitt aufweist, welche über einen in einem spitzen Winkel zur Horizontalen angeordneten mittleren Abschnitt miteinander verbunden sind. Der erste Abschnitt entspricht hierbei dem Anfang des Öffnungsvorgangs, wenn die Wand aus der Schließstellung nach oben verschwenkt wird. Der zweite Abschnitt entspricht dem Ende des Öffnungsvorgangs, wenn die Wand in die Offenstellung gezogen wird. Der mittlere Abschnitt ist der Verschwenkung des Hubarmelements zwischen dem Anfang und dem Ende des Öffnungsvorgangs zugeordnet.

Gemäß einer bevorzugten Ausführung weist das Kraftübertragungselement, insbesondere an der Unterseite, ein einseitig offenes Führungsloch auf, welches zumindest in der Schließstellung der Wand eine Gelenkachse des zweiten Gelenks des Anlenkelements aufnimmt. Darüber hinaus ist bevorzugt, wenn das zweite Gelenk des Anlenkelements zu Beginn des Öffnungsvorgangs relativ zu dem Führungsloch des Kraftübertragungselements verschoben wird.

Besonders bevorzugt ist eine Ausführung, bei welcher die Verschwenkvorrichtung im Dachbereich des Rahmenaufbaus angeordnet ist, wobei das mit dem Hubarmelement verbundene erste Gelenk des Anlenkelements in der Freigabestellung des Sicherungselements von einer Stellung unterhalb einer den Transportraum begrenzenden Dachebene in eine Stellung oberhalb der Dachebene verlagerbar ist. Auf diese Weise kann eine besonders flache Verschwenkvorrichtung erzielt werden, bei welcher der Schwenkpunkt des Hubarmelements während des Öffnungsvorgangs nach oben wandert.

Aufgrund der erfindungsgemäßen Ausführung des Transportbehälters kann sich die Verschwenkvorrichtung über weniger als die halbe Breite des Rahmenaufbaus erstrecken. Für die Zwecke dieser Offenbarung bezieht sich "Breite" auf die kürzere Seite und "Länge" auf die längere Seite des Transportbehälters.

Als Wand des Transportbehälters ist bevorzugt eine zweiteilige Seitenwand vorgesehen. Das Hubarmelement ist vorzugsweise im unteren Endbereich des oberen Wandteils angelenkt.
Gemäß einer bevorzugten Ausführung ist das Hubarmelement in der Schließstellung der Wand im Wesentlichen vertikal angeordnet und in der im Wesentlichen horizontal angeordneten Offenstellung der Wand im Wesentlichen horizontal angeordnet. Bei dieser Ausführung verschwenkt das Hubarmelement, ebenso wie die Wand, um im Wesentlichen 270° zwischen der im Wesentlichen vertikalen Schließstellung und der im Wesentlichen horizontalen Offenstellung. In der Offenstellung ist die Wand vorzugsweise benachbart des Dachbereichs des Transportbehälters angeordnet.

Wenn das Hubarmelement in der Schließstellung im Wesentlichen vertikal angeordnet und in der Offenstellung im Wesentlichen horizontal angeordnet ist, nimmt die Verschwenkvorrichtung vorteilhafterweise besonders wenig Raum entlang der Breite des Transportbehälters ein.

Die Erfindung wird nachstehend anhand eines in den Zeichnungen dargestellten Ausführungsbeispiels, auf das sie jedoch nicht beschränkt sein soll, weiter erläutert. Im Einzelnen zeigt:
Fig. 1 eine Ansicht eines Ausschnitts eines erfindungsgemäßen Transportbehälters mit einer Verschwenkvorrichtung, bei welcher zwischen einem Hubarmelement und einem Rahmenaufbau ein Anlenkelement vorgesehen ist, dessen Verschwenkbarkeit mit Erreichen eines vorgegebenen Schwenkwinkels freigegeben wird;
Fig. 2 eine schaubildliche Ansicht eines Ausschnitts der in Fig. 1 gezeigten Verschwenkvorrichtung;
Fig. 3 eine Ansicht der Verschwenkvorrichtung in der Schließstellung der Wand, wobei das Sicherungselement in einer Sperrstellung angeordnet ist;
Fig. 4 eine Ansicht der Verschwenkvorrichtung in einer Zwischenstellung zu Beginn des Öffnungsvorgangs, wobei der Schwenkpunkt des Hubarmelements an dem Anlenkelement durch das Sicherungselement blockiert ist;
Fig. 5 eine Ansicht der Verschwenkvorrichtung in einer weiteren Zwischenstellung, wobei das Sicherungselement im entlasteten Zustand vorliegt;
Fig. 6 eine Ansicht der Verschwenkvorrichtung in einer Anschlagstellung des Hubarmelements am Sicherungselement, welche bei einem vorgegebenen Schwenkwinkel des Hubarmelements erreicht wird;
Fig. 7 eine Ansicht der Verschwenkvorrichtung nach Verschwenkung aus der Anschlagstellung, wobei das Sicherungselement in die Freigabestellung verschoben wird;
Fig. 8 eine Ansicht der Verschwenkvorrichtung kurz vor Erreichen der Offenstellung der Wand, wobei der Schwenkpunkt zwischen dem Hubarmelement und dem Anlenkelement bei freigegebenem Sicherungselement nach oben verlagert wurde; und
Fig. 9 eine Ansicht eines Fahrzeugs mit einem Transportbehälter gemäß den Fig. 1 bis 8.

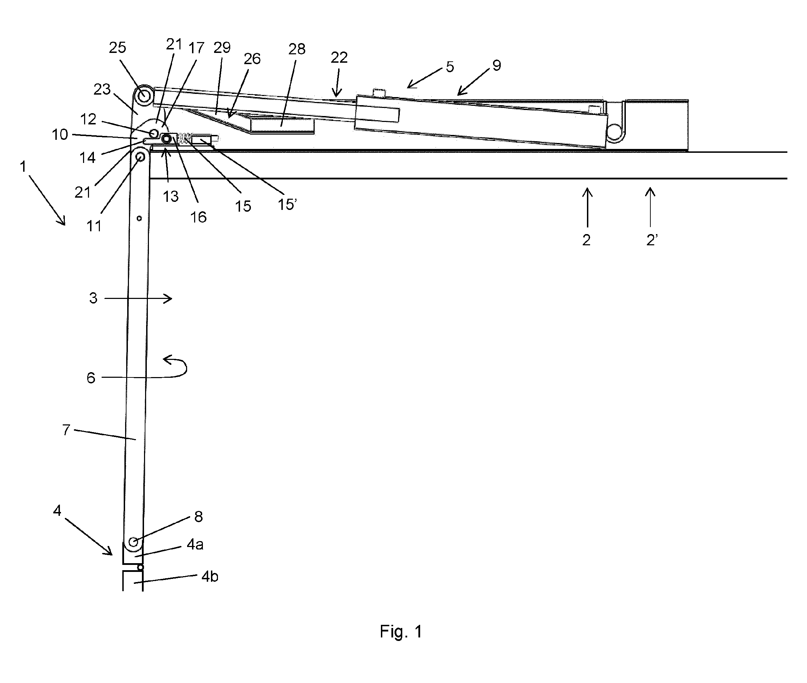

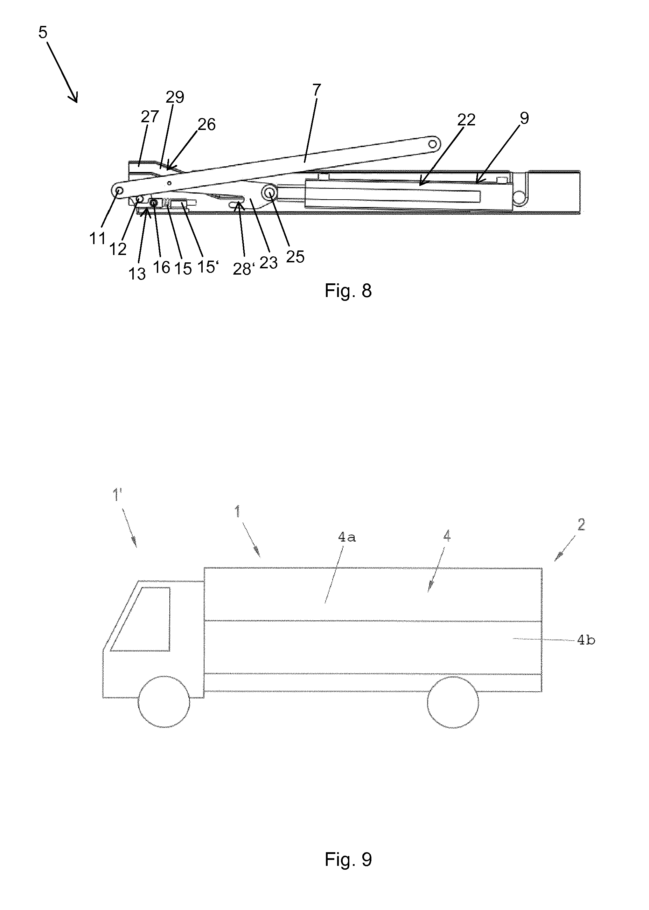

In Fig. 1 ist ein quaderförmiger Transportbehälter 1 gezeigt, welcher insbesondere als Fahrzeugaufbau (vgl. Fig. 9) oder Container verwendbar ist. Der Transportbehälter 1 weist einen (in der Zeichnung nur schematisch ersichtlichen) Rahmenaufbau 2 auf, welcher in bekannter Weise einen Transportraum 3 begrenzt. Darüber hinaus weist der Transportbehälter 1 zumindest eine öffenbare Wand 4 auf, welche in der gezeigten Ausführung als Seitenwand an einer der Längsseiten des Transportbehälters 1 ausgebildet ist. Selbstverständlich können auch beide Seitenwände öffenbar sein. Die Wand 4 weist einen oberen Wandteil 4a und einen unteren Wandteil 4b auf, welche gelenkig miteinander verbunden sind.

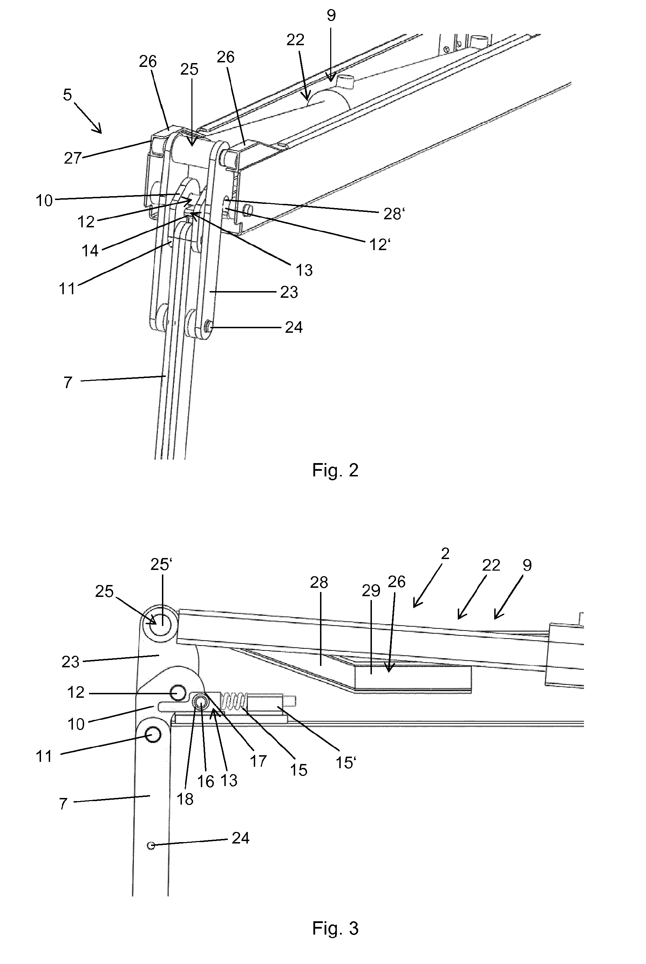

Wie aus Fig. 1, 2 weiters ersichtlich, enthält der Transportbehälter 1 in einem Dachbereich 2' weiters eine Verschwenkvorrichtung 5 zum Verschwenken der Wand 4 zwischen einer in Fig. 1 gezeigten Schließstellung, in welcher eine seitliche Ladeöffnung 6 des Transportbehälters 1 vollständig verschlossen ist, und einer in Fig. 8 gezeigten Offenstellung, in welcher die Ladeöffnung 6 vollständig freigegeben ist. Die Verschwenkvorrichtung 5 weist ein Hubarmelement 7 auf, welches mit der Wand 4 um eine Schwenkachse 8 am unteren Endbereich des oberen Wandteils 4a schwenkbar verbunden ist. Zudem ist eine Antriebseinheit 9 vorgesehen, welche mittels des Hubarmelements 7 ein Drehmoment auf die Wand 4 überträgt, so dass die Wand 4 zwischen der Schließ- und der Offenstellung selbsttätig verschwenkbar ist.

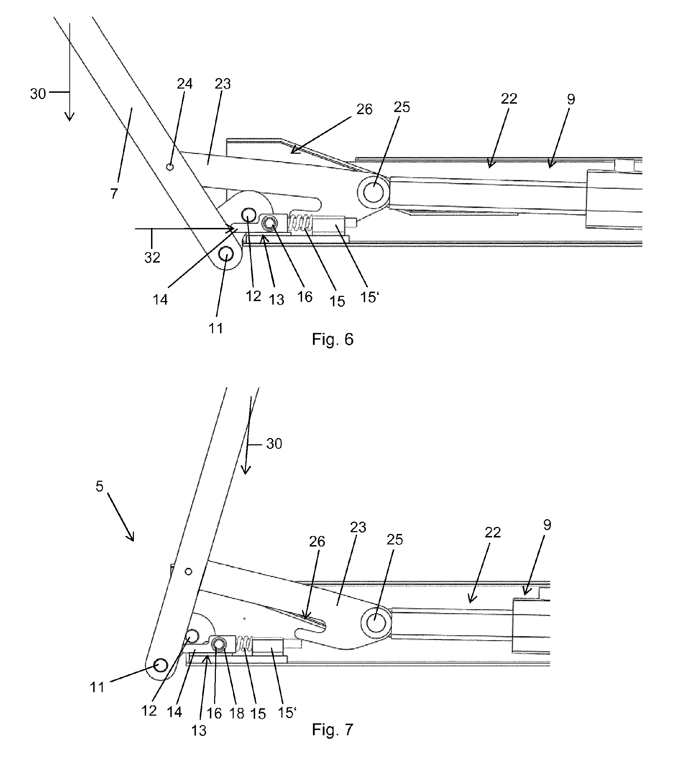

Wie aus Fig. 1, 2 weiters ersichtlich, weist die Verschwenkvorrichtung 5 zwischen dem Rahmenaufbau 2 und dem Hubarmelement 7 ein Anlenkelement 10 auf. Das Anlenkelement 10 ist über ein erstes Gelenk 11 mit dem Hubarmelement 7 sowie über ein zweites Gelenk 12 mit dem Rahmenaufbau 2 verbunden. Zudem weist die Verschwenkvorrichtung 5 ein Sicherungselement 13 auf, welches zwischen einer in Fig. 1 bis 6 gezeigten Sperrstellung, in der das zweite Gelenk 12 blockiert ist, und einer in Fig. 7, 8 ersichtlichen Freigabestellung, in der das zweite Gelenk 12 des Anlenkelements 10 freigegeben ist, überführbar ist. In der Freigabestellung des Sicherungselements 13 ist das mit dem Hubarmelement 7 verbundene erste Gelenk 11 des Anlenkelements 10 entlang einer vorgegebenen, kreisbogenförmigen Bahn nach oben verlagerbar, wenn das Hubarmelement 7 ausgehend von dem in Fig. 7 gezeigten Schwenkwinkel weiter in Richtung der Offenstellung verschwenkt wird.

Wie aus Fig. 2 (vgl. auch Fig. 6) weiters ersichtlich, weist das Sicherungselement 13 ein Betätigungsteil 14 auf, welches in derselben Ebene wie die von der Verschwenkung des Hubarmelements 7 aufgespannten Ebene liegt. Bei Erreichen des vorgegebenen Schwenkwinkels (vgl. Fig. 6) trifft das Hubarmelement 7 in einem Bereich benachbart des ersten Gelenks 11 auf das Betätigungsteil 14 des Sicherungselements 13, wodurch das Sicherungselement 13 in Richtung der Freigabestellung bewegt wird. Zu diesem Zweck ist das Sicherungselement 13 in einer horizontalen Ebene an dem Rahmenaufbau 2 verschieblich gelagert. In der gezeigten Ausführung ist zudem eine Feder 15 zwischen dem Sicherungselement 13 und einem Lagerbock 15' der Verschwenkvorrichtung 5 angeordnet, so dass das Sicherungselement 13 gegen Federkraft von der Sperrstellung in die Freigabestellung verschieblich ist.

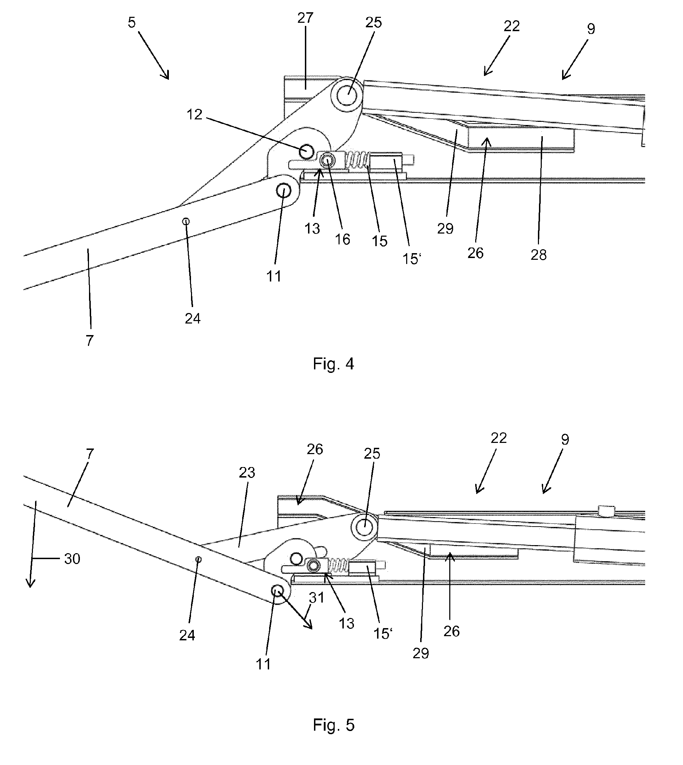

Wie aus Fig. 1 (vgl. auch Fig. 4 bis 8) weiters ersichtlich, weist das Sicherungselement 13 ein in der gezeigten Ausführung bolzenförmiges Sperrelement 16 auf, welches in der Sperrstellung des Sicherungselements 13 das zweite Gelenk 12 des Anlenkelements 10 blockiert. Zu diesem Zweck ist das Sperrelement 16 in der Sperrstellung unterhalb eines Lagerteils 17 des Anlenkelements 10 angeordnet, wodurch die Verschwenkbarkeit des Anlenkelements 10 um das zweite Gelenk 12 gesperrt ist. In der gezeigten Ausführung weist das Sperrelement 16 zudem ein Rollenelement 18 auf, welches bei der Verschiebung des Sperrelements 13 in Richtung der Freigabestellung auf einer entsprechenden Lagerfläche 19 des Lagerteils 17 des Anlenkelements 10 abrollt. Das Anlenkelement 10 wirkt dabei als zweiseitiger Hebel mit dem zweiten Gelenk 12 als Drehpunkt, wobei der erste Hebelarm auf Seite des Hubarmelements 7 das erste Gelenk 11 und der zweite Hebelarm auf Seite des Rahmenaufbaus 2 das Lagerteil 17 für das Sicherungselement 13 aufweist.

Wie aus Fig. 1, 2 weiters ersichtlich, weist das Anlenkelement 10 einen ersten Schenkel 20 mit dem ersten Gelenk 11 und einen zweiten Schenkel 21 mit dem Lagerteil 17 auf. Die Schenkel 20, 21 sind in der gezeigten Ausführung in einem Winkel im Wesentlichen 100° zueinander angeordnet. Aufgrund des Winkels zwischen den Schenkel 20, 21 kann das zweite Gelenk 12 vom Rand des Rahmenaufbaus nach innen gerückt sein. Wie aus Fig. 2 ersichtlich, sind in der gezeigten Ausführung zwei idente Anlenkelemente 10 vorgesehen, welche an gegenüberliegenden Seiten des Hubarmelements 7 angreifen.

Wie aus Fig. 1, 2 weiters ersichtlich, weist die Antriebseinheit 9 zum Verschwenken des Hubarmelements 7 einen hydraulischen Linearantrieb 22 auf. Der Linearantrieb 22 ist über ein Kraftübertragungselement 23 mit dem Hubarmelement 7 gekoppelt. Das Kraftübertragungselement 23 ist über eine erste Gelenkverbindung 24 mit dem Hubarmelement 7 und über eine zweite Gelenkverbindung 25 mit dem Linearantrieb 22 verbunden. Beim Öffnen der Wand 4 wird die Kraft des Linearantriebs 22 mittels des Kraftübertragungselements 23 auf das Hubarmelement 7 übertragen, welches die Wand 4 nach oben in Richtung der Offenstellung zieht. Wie aus Fig. 2 ersichtlich, sind in der gezeigten Ausführung zwei idente Kraftübertragungselemente 23 vorgesehen, welche an gegenüberliegenden Seiten des Hubarmelements 7 angreifen.

Wie aus Fig. 1, 2 weiters ersichtlich, sind in der gezeigten Ausführung zudem seitliche Führungsschienen 26 zur Führung der zweiten Gelenkverbindung 25 beim Öffnen bzw. Schließen der Wand 4 vorgesehen. Die Führungsschiene 26 weist einen im Wesentlichen horizontalen ersten Abschnitt 27 und einen im Wesentlichen horizontalen zweiten Abschnitt 28 auf, welche über einen in einem spitzen Winkel zur Horizontalen angeordneten mittleren Abschnitt 29 miteinander verbunden sind.

Wie aus Fig. 2 weiters ersichtlich, weist das Kraftübertragungselement 23 an der dem Rahmenaufbau zugewandten Unterseite zudem ein einseitig offenes Führungsloch 28' auf, welches in der Schließstellung der Wand 4 und zu Beginn des Öffnungsvorgangs die Gelenkachse 12' des zweiten Gelenks 12 des Anlenkelements 10 aufnimmt.

In den Fig. 3 bis 8 ist die Verschwenkvorrichtung in verschiedenen Stadien des Öffnungsvorgangs gezeigt, wobei der besseren Übersicht halber die Wand 4 und der Rahmenaufbau 2 weggelassen wurden.

Gemäß Fig. 3 ist die Verschwenkvorrichtung 5 in der Schließstellung der Wand 4 gezeigt, wobei das Hubarmelement 7 in einer im Wesentlichen vertikalen Stellung angeordnet ist. Das Sicherungselement 13 ist in der Sperrstellung angeordnet, so dass das zweite Gelenk 12 des Anlenkelements 10 im blockierten Zustand vorliegt. In der gezeigten Ausführung ist das erste Gelenk 11 in der Sperrstellung des Sicherungselements in einer unteren Stellung unterhalb einer den Transportraum 3 begrenzenden Dachebene 2" angeordnet. Die Feder 15 zwischen dem Sicherungselement 13 und dem Lagerbock 15' ist hierbei im entspannten Zustand angeordnet. Die Gelenkachse 12' des zweiten Gelenks 12 ist in dem Führungsloch 28' aufgenommen. Die Gelenkachse 25' der zweiten Gelenkverbindung 25 zwischen dem Linearantrieb 22 und dem Kraftübertragungselement 23 befinden sich in den horizontalen ersten Abschnitten 27 der Führungsschienen 26.

Fig. 4 zeigt die Verschwenkvorrichtung 5 in einer Zwischenstellung zu Beginn des Öffnungsvorgangs, nachdem der Linearantrieb 23 der Antriebseinheit 9 zum Verschwenken der Wand 4 aktiviert wurde. Das zweite Gelenk 12 des Anlenkelements 10 liegt im blockierten Zustand vor, so dass das Hubarmelement 7 um den Schwenkpunkt in der unteren Stellung verschwenkt wird. Der Linearantrieb 23 bringt hierbei eine Zugkraft in Pfeilrichtung 29 auf die zweite Gelenkverbindung 25 derart auf, dass die zweite Gelenkverbindung 25 entlang der Führungsschienen 26 nach innen verschoben wird. Die Zugkraft des Linearantriebs 22 wird in eine Verschwenkung des Kraftübertragungselements 23 umgewandelt, wobei das Kraftübertragungselement 23 an der ersten Gelenkverbindung 24 eine Zugkraft aufbringt, welche die Gewichtskraft an dem Hubarmelement 7 (Pfeil 30) überwindet. Das Langloch 28 wird hierbei entlang der Gelenkachse 12' des zweiten Gelenks 12 verschoben.

Gemäß Fig. 5 wurde das Hubarmelement 7 der Verschwenkvorrichtung 5 weiter nach oben verschwenkt. In der gezeigten Zwischenstellung wirkt an dem ersten Gelenk 11 zwischen dem Hubarmelement 7 und dem Anlenkelement 10 ein Gegendruck (Pfeil 31) in Reaktion auf die Zugkraft an der ersten Gelenkverbindung 24 und auf die Gewichtskraft (Pfeil 30) an dem Hubarmelement 7, so dass das Sicherungselement 13 im entlasteten Zustand vorliegt.

Gemäß Fig. 6 wurde das Hubarmelement 7 um den vorgegebenen Schwenkwinkel, beispielsweise im Wesentlichen 135°, verschwenkt, so dass das Hubarmelement 7 an dem Betätigungsteil 14 des Sicherungselement 13 anschlägt. Das Betätigungselement 14 ragt hierbei unter der Gelenkachse 12' des zweiten Gelenks 12 nach außen durch. Bei einer weiteren Verschwenkung des Hubarmelements 7 aus der gezeigten Anschlagstellung in Richtung der Offenstellung übt das Hubarmelement 7 eine Kraft in Pfeilrichtung 32 auf das Betätigungsteil 14 aus, mit welcher das Sicherungselement 13 nach innen in Richtung der Freigabestellung verschoben wird. Bei der Überführung in die Anschlagstellung gemäß Fig. 6 wird die Gelenkachse 25' der zweiten Gelenkverbindung 25 entlang der mittleren Abschnitte 29 der Führungsschienen 26 verschoben.

Gemäß Fig. 7 liegt das Sicherungselement 13 in der Freigabestellung vor, so dass das Anlenkelement 10 um das zweite Gelenk 12 verschwenkbar ist. Beim Verschwenken des Hubarmelements 7 ausgehend von der Stellung gemäß Fig. 7 wird daher das erste Gelenk 11 des Anlenkelements 10 in eine obere Stellung oberhalb der Dachebene 2" verlagert, so dass das Hubarmelement 7 über die vertikale Stellung hinaus auf den Dachbereich 2' des Rahmenaufbaus 2 umklappbar ist (vgl. Fig. 8). In der Freigabestellung des Sicherungselements 13 liegt die Feder 15 im gespannten bzw. komprimierten Zustand vor. Das Rollenelement 18 wird hierbei an der Lagerfläche des Lagerteils 17 des Anlenkelements 10 abgerollt. In der gezeigten Stellung hat zudem die zweite Gelenkverbindung 25 zwischen dem Linearantrieb 22 und dem Kraftübertragungselement 23 den horizontalen Abschnitt 28 erreicht, in welchem die zweite Gelenkverbindung 25 bis zum Erreichen der Offenstellung verschoben wird.

Fig. 8 zeigt die Verschwenkvorrichtung 5 kurz vor Erreichen der Offenstellung der Wand 4, wobei das Hubarmelement 7 im Wesentlichen horizontal benachbart des Dachbereichs 2' des Rahmenaufbaus 2 angeordnet ist. Das erste Gelenk 11 des Anlenkelements 10 wurde hierbei bei freigegebenem Sicherungselement 13 in eine obere Stellung oberhalb der Dachebene 2" verlagert. Aufgrund der Verlagerung des ersten Gelenks 11 bleibt der Abstand zwischen der mit dem Linearantrieb 22 verbundenen zweiten Gelenkverbindung 25 des Kraftübertragungselements 23 und dem mit dem Hubarmelement 7 verbundenen ersten Gelenk 11 des Anlenkelements 10 während des Öffnungsvorgangs im Wesentlichen konstant, wodurch eine im Wesentlichen gleichbleibende Öffnungsgeschwindigkeit der Wand 4 erzielt wird.

In der gezeigten Ausführung kann sich die Verschwenkvorrichtung 5 über weniger als die halbe Breite des Rahmenaufbaus 2 erstrecken.

In Fig. 9 ist schematisch ein Lastkraftwagen 1' gezeigt, welcher den quaderförmigen Transportbehälter 1 gemäß Fig. 1 bis 8 aufweist. Der Transportbehälter 1 weist einen in den Zeichnungen lediglich schematisch veranschaulichten Rahmenaufbau 2 aus vertikalen und horizontalen Trägern auf. Der Rahmenaufbau 2 des Transportbehälters 1 schließt einen Transportraum ein, der an zumindest einer Seite von einer Seitenwand 4 begrenzt wird. In der gezeigten Ausführung bildet die Seitenwand 4 eine Längsseite des Transportbehälters 1. Alternativ kann die Seitenwand 4 an einer Stirnseite des Transportbehälters 1 vorgesehen sein. Gemäß Fig. 9 ist die Seitenwand 4 in einer am Rahmenaufbau 2 anliegenden Schließstellung angeordnet, wobei eine seitliche Ladeöffnung 6 des Transportbehälters 1 vollständig verschlossen ist. Die Seitenwand 4 weist einen oberen Wandteil 4a und einen unteren Wandteil 4b auf, welche um eine horizontal verlaufende Schwenkachse gelenkig miteinander verbunden sind. Hierbei können gleichartige Wandteile 4a, 4b oder eine asymmetrisch geteilte Seitenwand 4 vorgesehen sein.

## Patentansprüche

1. Transportbehälter (1), insbesondere Fahrzeugaufbau oder Container, mit einem einen Transportraum (3) einschließenden Rahmenaufbau (2), mit einer Wand (4) und mit einer Verschwenkvorrichtung (5) zum Verschwenken der Wand (4) zwischen einer am Rahmenaufbau (2) anliegenden, eine Ladeöffnung (6) verschließenden Schließstellung, und einer die Ladeöffnung (6) freigebenden Offenstellung, wobei die Verschwenkvorrichtung (5) ein mit der Wand (4) gelenkig verbundenes Hubarmelement (7) und eine Antriebseinheit (9) zur Drehmomentübertragung auf das Hubarmelement (7) aufweist, **dadurch gekennzeichnet, dass** die Verschwenkvorrichtung (5) zwischen dem Rahmenaufbau (2) und dem Hubarmelement (7) ein Anlenkelement (10) aufweist, welches über ein erstes Gelenk (11) mit dem Hubarmelement (7) und über ein zweites Gelenk (12) mit dem Rahmenaufbau (2) verbunden ist, wobei die Verschwenkvorrichtung (5) weiters ein Sicherungselement (13) aufweist, welches von einer das zweite Gelenk (12) des Anlenkelements (10) blockierenden Sperrstellung in der Schließstellung der Wand (4) bei Verschwenkung des Hubarmelements (7) um einen vorgegebenen Schwenkwinkel in eine Freigabestellung überführbar ist, in welcher das zweite Gelenk (12) des Anlenkelements (10) freigegeben ist, so dass das mit dem Hubarmelement (7) verbundene erste Gelenk (11) des Anlenkelements (10) bei einer weiteren Verschwenkung des Hubarmelements (7) in Richtung der Offenstellung der Wand (4) entlang einer vorgegebenen Bahn verlagerbar ist.

2. Transportbehälter (1) nach Anspruch 1, **dadurch gekennzeichnet, dass** das Sicherungselement (13) ein in der Ebene der Verschwenkung des Hubarmelements (7) angeordnetes Betätigungsteil (14) aufweist, so dass das Hubarmelement (7) bei Erreichen des vorgegebenen Schwenkwinkels auf das Betätigungsteil (14) des Sicherungselement (13) trifft und dieses in Richtung der Freigabestellung drückt.

3. Transportbehälter (1) nach Anspruch 1 oder 2, **dadurch gekennzeichnet, dass** das Sicherungselement (13) an dem Rahmenaufbau (2), vorzugsweise in einer horizontalen Ebene, zwischen der Sperrstellung und der Freigabestellung verschieblich gelagert ist.

4. Transportbehälter (1) nach Anspruch 3, **dadurch gekennzeichnet, dass** das Sicherungselement (13) gegen die Kraft einer Feder (15) zwischen der Sperrstellung und der Freigabestellung verschieblich ist.

5. Transportbehälter (1) nach einem der Ansprüche 1 bis 4, **dadurch gekennzeichnet, dass** das Sicherungselement (13) ein insbesondere bolzenförmiges Sperrelement (16) aufweist, welches mit einem entsprechenden Lagerteil (17) des Anlenkelements (10) zusammenwirkt.

6. Transportbehälter (1) nach Anspruch 5, **dadurch gekennzeichnet, dass** das Anlenkelement (10) als zweiseitiger Hebel mit dem zweiten Gelenk (12) als Drehpunkt zwischen einem das erste Gelenk (11) aufweisenden ersten Hebelarm und einem das Lagerteil (17) für das Sicherungselement (13) aufweisenden zweiten Hebelarm ausgebildet ist.

7. Transportbehälter (1) nach Anspruch 5 oder 6, **dadurch gekennzeichnet, dass** das Anlenkelement (10) einen ersten Schenkel (20) mit dem ersten Gelenk (11) und einen zweiten Schenkel (21) mit dem Lagerteil (17) aufweist, wobei die Schenkel (20, 21) in einem Winkel von 90° bis 110°, insbesondere im Wesentlichen 100°, zueinander angeordnet sind.

8. Transportbehälter (1) nach einem der Ansprüche 5 bis 7, **dadurch gekennzeichnet, dass** das Sperrelement (16) ein Rollenelement (18) aufweist, welches bei der Verschiebung des Sperrelements (16) entlang einer entsprechenden Lagerfläche des Lagerteils (17) des Anlenkelements (10) abrollbar ist.

9. Transportbehälter (1) nach einem der Ansprüche 1 bis 8, **dadurch gekennzeichnet, dass** die Antriebseinheit (9) zur Drehmomentübertragung auf das Hubarmelement (7) einen, vorzugsweise genau einen, insbesondere hydraulischen oder pneumatischen Linearantrieb (22) aufweist.

10. Transportbehälter (1) nach Anspruch 9, **dadurch gekennzeichnet, dass** zwischen dem Linearantrieb (22) und dem Hubarmelement (7) ein Kraftübertragungselement (23) vorgesehen ist, welches über eine erste Gelenkverbindung (24) mit dem Hubarmelement (7) und über eine zweite Gelenkverbindung (25) mit dem Linearantrieb (22) verbunden ist.

11. Transportbehälter (1) nach Anspruch 10, **dadurch gekennzeichnet, dass** die zweite Gelenkverbindung (25) zwischen dem Linearantrieb (22) und dem Kraftübertragungselement (23) in einer Führungsschiene (26) verschieblich gelagert ist.

12. Transportbehälter (1) nach Anspruch 11, **dadurch gekennzeichnet, dass** die Führungsschiene (26) einen im Wesentlichen horizontalen ersten Abschnitt (27) und einen im Wesentlichen horizontalen zweiten Abschnitt (28) aufweist, welche über einen in einem spitzen Winkel zur Horizontalen angeordneten mittleren Abschnitt (29) miteinander verbunden sind.

13. Transportbehälter (1) nach einem der Ansprüche 10 bis 12, **dadurch gekennzeichnet, dass** das Kraftübertragungselement (23), insbesondere an der Unterseite, ein einseitig offenes Führungsloch (28') aufweist, welches zumindest in der Schließstellung der Wand (4) eine Gelenkachse (12') des zweiten Gelenks (12) des Anlenkelements (10) aufnimmt.

14. Transportbehälter (1) nach einem der Ansprüche 1 bis 13, **dadurch gekennzeichnet, dass** die Verschwenkvorrichtung (5) im Dachbereich (2') des Rahmenaufbaus (2) angeordnet ist, wobei das mit dem Hubarmelement (7) verbundene erste Gelenk (11) des Anlenkelements (10) in der Freigabestellung des Sicherungselements (13) von einer Stellung unterhalb einer den Transportraum (3) begrenzenden Dachebene (2") in eine Stellung oberhalb der Dachebene (2") verlagerbar ist.

15. Transportbehälter (1) nach einem der Ansprüche 1 bis 14, **dadurch gekennzeichnet, dass** sich die Verschwenkvorrichtung (5) über weniger als die halbe Breite des Rahmenaufbaus (2) erstreckt.

16. Transportbehälter (1) nach einem der Ansprüche 1 bis 15,
**dadurch gekennzeichnet, dass** als Wand (4) eine zweiteilige Seitenwand vorgesehen ist.

17. Transportbehälter (1) nach einem der Ansprüche 1 bis 16, **dadurch gekennzeichnet, dass** das Hubarmelement (7) in der Schließstellung der Wand (4) im Wesentlichen vertikal und in der im Wesentlichen horizontal angeordneten Offenstellung der Wand (4) im Wesentlichen horizontal angeordnet ist.
